# FASCICULE DE BREVET EUROPEEN

(11) **EP 0 517 634 B1**
(45) Date de publication et mention de la délivrance du brevet: **24.01.1996**
(21) Numéro de dépôt: 92440069.0
(22) Date de dépôt: 05.06.1992
(51) Int. Cl.: B60P 3/08

(54) **Ensemble de levage à grand débattement pour le déplacement vertical d'un plan porteur d'un chargement**
Hebevorrichtung mit vertikaler Verlagerung einer Ladetragebene
Lifting device with a large vertical displacement of a plane

(30) Priorité: 07.06.1991 FR 9107109
(43) Date de publication de la demande: 09.12.1992
(73) Titulaire: LOHR INDUSTRIE, F-67980 Hangenbieten (FR)
(72) Inventeur: Vogel, Lucien, Offenheim, F-67370 Truchtersheim (FR)
(74) Mandataire: Metz, Paul

(56) Documents cités:
- EP-A- 0 024 265
- FR-A- 2 148 069
- FR-A- 2 213 856
- US-A- 3 931 895

## Description

La présente invention se rapporte à un ensemble de levage à grand débattement pour une structure de chargement, plus particulièrement une plate-forme porte-véhicules.

L'invention se rapporte également à l'organe individuel de levage à grand débattement associé en couple à un organe homologue situé en regard sur le châssis d'un véhicule porteur en vue de constituer l'ensemble de levage ci-dessus.

On connaît déjà de multiples ensembles mécaniques pour la manoeuvre en élévation d'une structure de chargement du type plate-forme.

A titre d'état de la technique, on se réfère au brevet français antérieur au nom du déposant n° 2213856 décrivant un ensemble de moyens pour le levage et l'abaissement d'une plate-forme porte-véhicules.

Conformément à cette invention, chaque poteau de soutien de la plate-forme supérieure est inclinable à la manière d'un poteau de levage et articulé respectivement par chacune de ses extrémités inférieure et supérieure à la plate-forme inférieure et à la plate-forme supérieure.

Plus particulièrement, l'extrémité inférieure de chaque poteau de levage se déplace sous l'effet d'un vérin le long d'une glissière horizontale.

Chaque poteau comporte une articulation le reliant à la plate-forme inférieure par un bras de soutien.

Selon une variante perfectionnée le bras de soutien est prolongé et coudé au-delà de son articulation avec la plate-forme inférieure.

L'extrémité inférieure de son coude est reliée à un vérin fixé au plateau inférieur agissant en poussée ou en traction sur le bras de soutien.

Cette variante présente l'avantage d'un moindre encombrement.

On connaît aussi la demande de brevet européen EP-A-0024265 se rapportant à un véhicule, notamment pour le transport d'automobiles, à deux plate-formes superposées porteuses du chargement, selon le préambule de la revendication 1.

La plate-forme supérieure est reliée au châssis par au moins un ensemble d'élévation et d'abaissement formé d'organes individuels de levage se composant chacun d'un poteau porteur basculant articulé à la plate-forme supérieure par son extrémité supérieure puis au châssis, et à une extrémité d'un bras oblique de soutien.

Les bras obliques de soutien sont jumelés par un arbre d'actionnement pivotant sous l'effet d'un vérin unique central.

Avec ces ensembles de levage on réalise une élévation de hauteur maximale égale à celle du poteau basculant. Cette longueur est fixe et en position rabattue, le poteau garde toute sa longueur occupant long du châssis un emplacement correspondant à son encombrement maximal.

Cette invention ne procure aucun avantage particulier sur les deux points les plus importants, à savoir : le grand débattement c'est-à-dire l'extension de longueur permettant une surélévation au delà de sa position entièrement relevée et un encombrement minimal en position rabattue.

L'invention a pour but de réunir ces deux avantages et de simplifier les moyens moteurs de levage en raison de l'effort quasi constant demandé au vérin pendant pratiquement toute sa course alors que cet effort est classiquement important au départ dans la position rabattue du poteau.

D'autres ensembles ont été envisagés mettant en oeuvre des dispositifs annexes de commande et d'appui.

Tous ces ensembles ne présentent qu'un débattement limité pour un encombrement en longueur important en position repliée.

Afin de gagner encore en capacité de chargement, on cherche à l'aide de remorques à châssis surbaissé à réaliser des ensembles de levage présentant le plus grand débattement possible avec un encombrement à l'état replié le plus faible possible.

Par ailleurs, la tendance au rapprochement des positions des voitures transportées rend nécessaire l'adoption d'ensembles de levage à trajectoire quasi verticale.

En effet, les plates-formes du camion et de la remorque ne doivent pas se rapprocher trop lors des mouvements de levage ou d'abaissement en charge.

La présente invention vise précisément à obtenir, à l'aide de bras basculants, un ensemble de levage à grand débattement autorisant une élévation quasi verticale de la plate-forme tout en bénéficiant d'une hauteur supplémentaire de levage et en exploitant au maximum l'effort du vérin sur toute sa course.

A cet effet, l'invention se rapporte à un ensemble de levage à grand débattement formé d'un couple d'organes individuels de levage reliés entre eux pour l'élévation et l'abaissement d'un plan porteur d'un chargement, notamment d'une plate-forme porte-véhicules à laquelle sont articulés, par chacune de leurs extrémités supérieures, des organes individuels de levage se composant chacun d'un poteau porteur basculant articulé par son extrémité inférieure à un châssis, par son extrémité supérieure à la plate-forme et en un point intermédiaire à une extrémité d'un bras oblique de soutien, lui-même articulé par son autre extrémité à une base fixe par rapport au châssis et actionné en pivotement par un élément moteur en coordination de mouvement avec son homologue de l'autre côté du châssis, l'une ou l'autre des extrémités du poteau basculant étant articulée sur une base mobile en translation par rapport au support adjacent, plateforme ou châssis, caractérisé en ce que chaque poteau porteur basculant est relié à la plate-forme par une liaison extensible de longueur variable en fonction de l'inclinaison dudit poteau porteur basculant.

De nombreux avantages découlent de la mise en oeuvre de l'invention dont on indiquera ci-après les principaux :
. exploitation optimale de l'effort du vérin ;
. hauteur de levage supérieure aux dispositifs antérieurs pour un même encombrement ;
. encombrement minimal qui permet le montage de l'ensemble sans interférer avec le passage de roues ou sans passer au-dessus. Cet avantage s'avère notablement important dans le cas de remorques à châssis surbaissé car l'encombrement disponible est faible ;
. trajectoire de l'extrémité supérieure se rapprochant sensiblement d'une droite verticale.

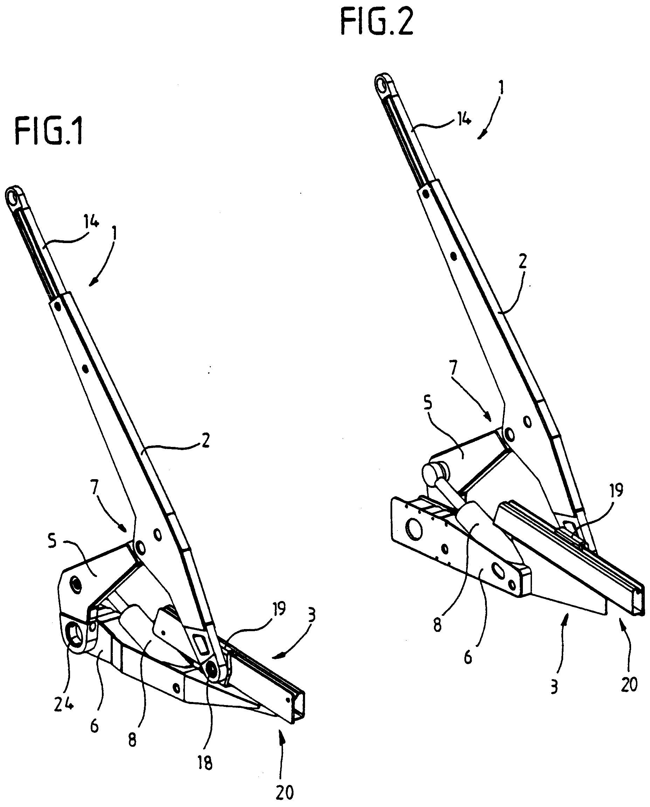

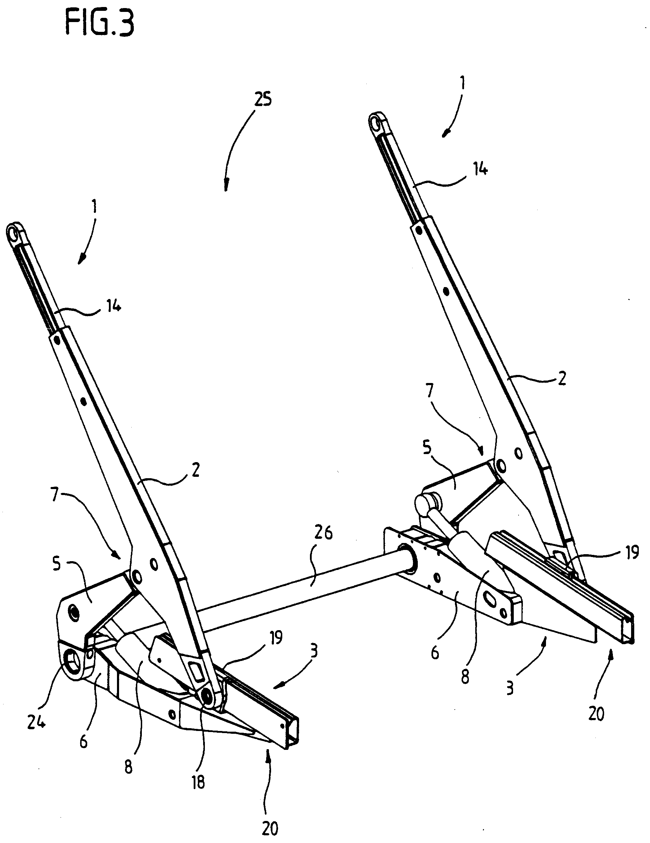

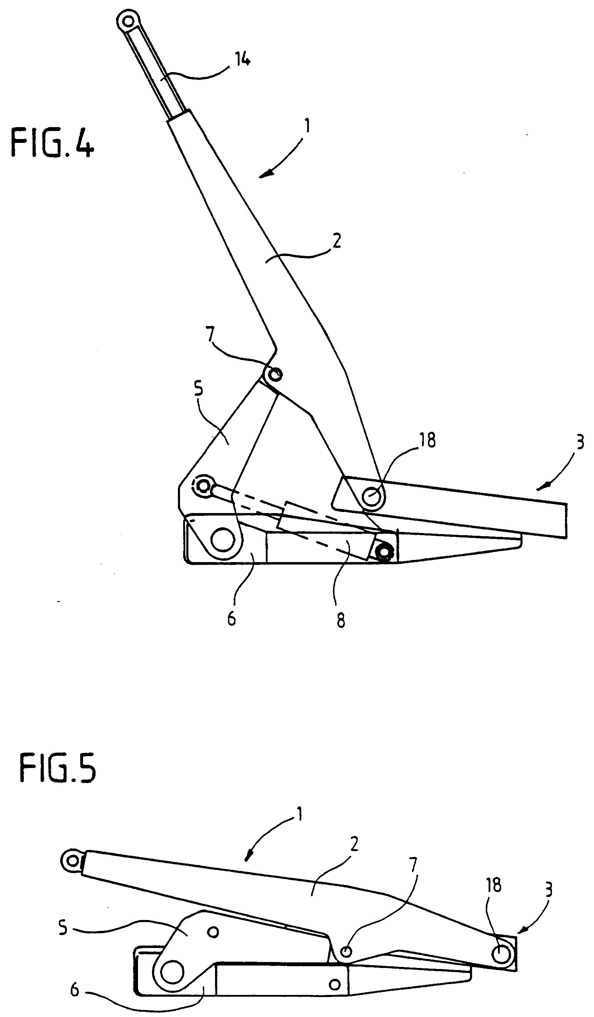

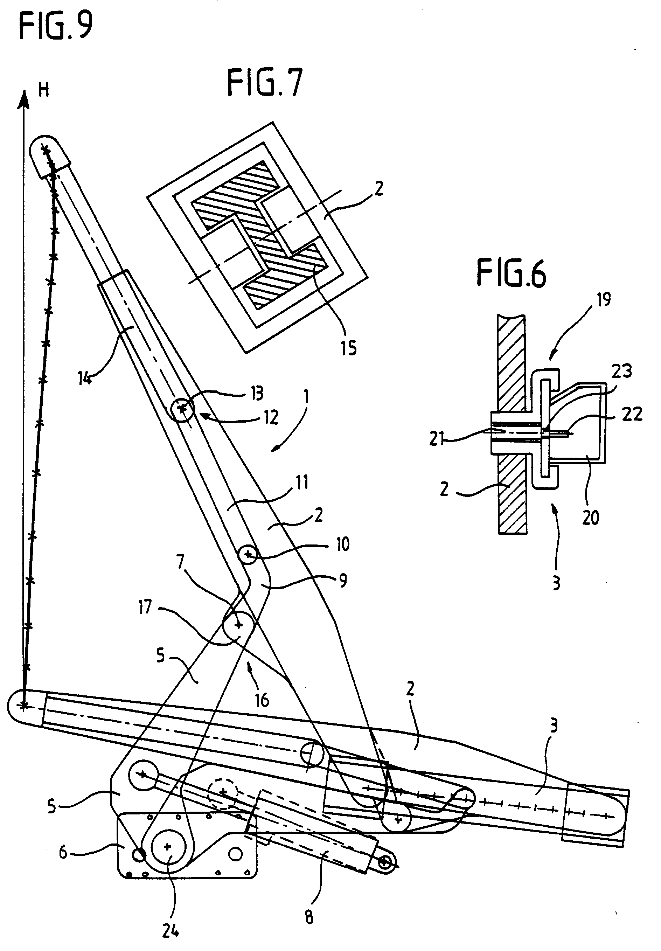

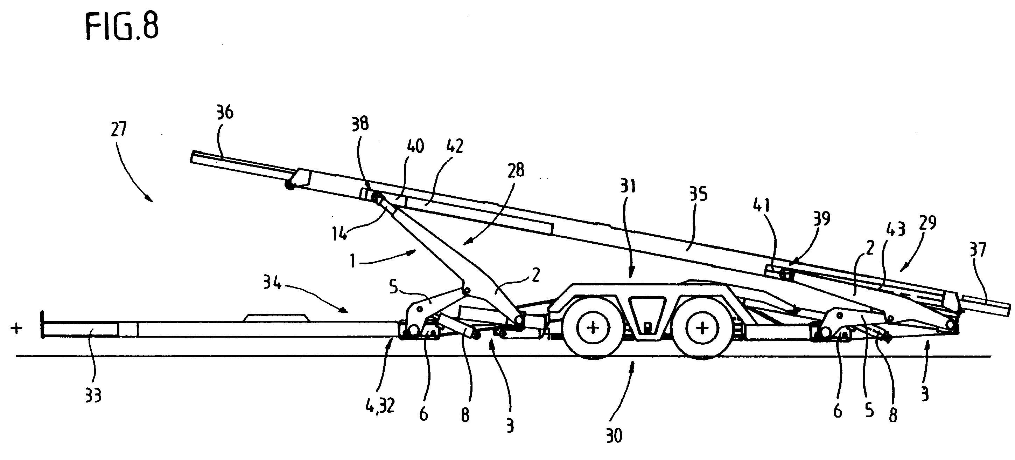

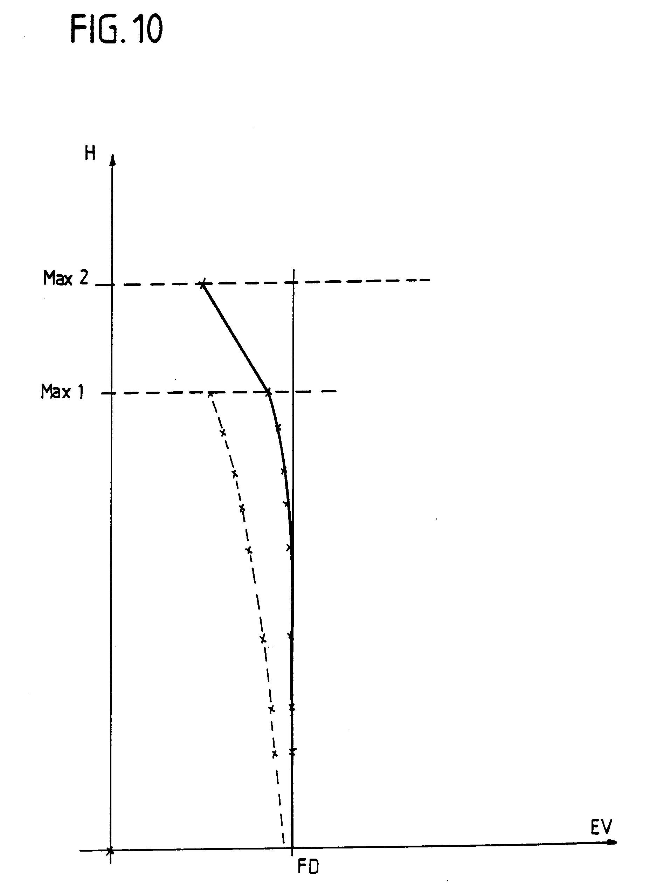

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue en perspective d'un organe de levage seul à l'état relevé vu de l'avant ;
. la figure 2 est une vue en perspective d'un organe de levage seul à l'état relevé vu de l'arrière ;
. la figure 3 est une vue en perspective de côté d'un couple d'organes de levage à l'état relevé ;
. les figures 4 et 5 sont des vues de profil d'un organe de levage respectivement en position relevée et repliée ;
. la figure 6 est une vue en coupe transversale de la base mobile sur laquelle est articulé à pivotement le poteau porteur basculant ;
. la figure 7 est une vue en coupe transversale de la tige d'extension dans le poteau ;
. la figure 8 est une vue de profil d'une application à une remorque porte-véhicules ;
. la figure 9 est la représentation de la trajectoire de l'extrémité de la tige d'extension en fonction de la hauteur H de levage, organe de levage vu de profil dans ses deux positions extrêmes ;
. la figure 10 est un graphique comparatif représentant la hauteur H de levage en fonction de l'effort EV du vérin pour un ensemble de levage conventionnel (ligne en traits pointillés) et pour l'ensemble de levage selon l'invention (ligne continue).

La présente invention procède tout d'abord de l'idée générale inventive qui consiste à former un ensemble de levage en reliant deux organes individuels unitaires de levage d'une plate-forme par une liaison de jumelage ou par synchronisation de commande des éléments moteurs de cabrage.

Elle procède ensuite de l'idée générale inventive qui consiste à imaginer de réaliser chaque ensemble unitaire sous la forme d'un poteau porteur basculant de levage monté pivotant autour d'une base mobile en translation par rapport au châssis, relié d'une part à un bras de soutien moteur articulé sur une base fixe par rapport au châssis et d'autre part à la plate-forme par une liaison extensible, de longueur variable en fonction de l'inclinaison dudit poteau.

On décrira d'abord un ensemble unitaire de levage appelé également ci-après organe individuel de levage 1.

Il se compose d'un poteau porteur basculant 2 de levage articulé autour d'une base mobile 3 en translation par rapport à un châssis 4, d'un bras oblique de soutien 5 monté pivotant sur une base fixe 6 par rapport au châssis 4 et articulé par une articulation 7 au poteau porteur basculant 2. Il se compose également d'un élément moteur, par exemple un vérin 8 agissant au voisinage de l'extrémité inférieure du bras oblique de soutien 5. Ce dernier se poursuit à l'intérieur du poteau basculant 2 de levage par une extrémité coudée 9 reliée par une articulation 10 à une bielle de poussée 11. L'autre extrémité 12 de cette bielle est reliée par une articulation 13 à une tige d'extension 14 montée coulissante dans le poteau basculant le long d'un profilé de guidage 15, par exemple du type de celui représenté sur la figure 7.

Le poteau porteur basculant 2 présente une fente ou lumière 16 au niveau du passage de l'extrémité du bras de soutien 5. Cette fente 16 est bordée par deux oreilles constituant une chape 17 pour le maintien de l'axe de pivotement de l'articulation 7 du bras de soutien 5 au poteau basculant 2. Cette chape 17 contribue en plus au renforcement mécanique local du poteau basculant de levage.

Comme on peut le voir sur les figures, la sortie et le retrait de la tige d'extension 14 sont automatiques et progressifs en fonction de l'angle de cabrage du poteau.

La tige d'extension 14 sort progressivement de l'extrémité du poteau au fur et à mesure de la montée de celui-ci vers sa position de levage maximale.

La tige d'extension 14 est entièrement rentrée en position extrême basse et sortie à pleine course en position extrême haute du poteau basculant.

L'extrémité coudée 9 du bras oblique de soutien 5 est articulée à la bielle de poussée 11 et sert de bras de levier qui, par l'intermédiaire de la bielle, pousse progressivement la tige d'extension 14 hors du poteau basculant 2 de levage jusqu'à pleine course en position extrême haute du levier et du poteau.

L'extrémité basse du poteau porteur basculant 2 de levage est montée pivotante par une articulation 18 sur la base 3 mobile en translation, par exemple un coulisseau et plus particulièrement un chariot 19 se déplaçant le long d'une glissière 20 fixée en rive sur le châssis 4 du véhicule porteur. Ce chariot se déplace de part et d'autre de la glissière 20 lors du basculement du poteau entre ses deux positions extrêmes (figures 6 et 9).

Afin d'immobiliser le poteau dans une inclinaison, on prévoit un blocage mécanique du chariot 19 par rapport à la glissière 20. Ce blocage peut être effectué à l'aide d'un verrou intégré 21 dans le chariot, par exemple un doigt de blocage effaçable 22 s'engageant dans des passages ou perforations 23 pratiqués dans la glissière.

Ce verrou bloque le poteau en inclinaison en créant une triangulation rendant indéformable l'ensemble articulé formé par les articulations 7, 18 et l'articulation inférieure 24 du bras de soutien oblique 5.

La courbe (figure 9) montrant la suite des diverses positions successives (sous la forme de croix) de l'articulation d'extrémité avec la plate-forme se rapproche d'une droite verticale garantissant un mouvement de levage par translation quasi verticale.

Elle permet de bien se rendre compte d'un des principaux avantages de l'invention qui consiste à procurer un grand débattement tout en garantissant des mouvements de déplacement vers le haut quasi verticaux.

Les courbes comparatives des efforts EV nécessaires au vérin en fonction de la hauteur H de levage montrent un des autres avantages principaux de l'invention.

A l'observation de ces courbes, on se rend compte de l'emploi optimal de la force disponible FD du vérin.

En effet, l'ensemble de levage idéal peut être défini comme celui qui exploite la totalité de la force disponible du vérin sur l'intégralité du déplacement de basculement du poteau vers le haut, ce qui se traduirait par la courbe verticale FD (force disponible) sur la représentation graphique de la figure 10.

On peut constater sur les courbes représentées que la courbe relative à l'ensemble de levage selon la technique antérieure (courbe en pointillés) s'éloigne rapidement de la verticale, alors que la courbe relative à l'ensemble selon l'invention (courbe en trait plein) reste beaucoup plus proche de la verticale.

Par ailleurs, la hauteur maximale de levage Max1 de l'ensemble de levage selon la technique antérieure est largement inférieure à la hauteur maximale de levage Max2 possible avec l'ensemble de levage selon l'invention et ceci pour un encombrement identique.

Comme indiqué, l'invention se rapporte également à un ensemble double de levage 25 formé de deux poteaux porteurs basculants 2 réunis entre eux au niveau des bras obliques de soutien par une liaison fonctionnelle de commande synchronisée ou par une liaison mécanique de jumelage.

Ainsi chaque vérin 8 actionnant par le bras oblique de soutien 5 un poteau porteur basculant 2, est commandé en synchronisation avec son homologue.

La même liaison peut être purement mécanique par l'intermédiaire d'une barre de jumelage 26 reliant mécaniquement entre elles les extrémités inférieure des bras obliques de soutien 5.

La barre de jumelage 26 assure la simultanéité des mouvements des poteaux ainsi que le parallélisme nécessaire au bon fonctionnement du levage.

Comme on le verra ci-après, les poteaux porteurs basculants 2 sont reliés mécaniquement entre eux au niveau de leurs extrémités supérieures par la plate-forme de chargement. Celle-ci constitue la liaison mécanique supérieure de jumelage.

On examinera ci-après une unité routière, par exemple une remorque 27, équipée de deux couples d'ensemble de levage selon l'invention, un couple avant 28 et un couple arrière 29.

La remorque 27 comporte classiquement un train roulant 30 définissant un espace appelé classiquement passage de roues 31, un châssis 32 terminé par un timon 33. Le châssis 32 porte un plan de chargement inférieur 34 et une plate-forme supérieure 35 pourvue de rallonges coulissantes avant 36 et arrière 37.

Comme indiqué, la remorque 27 présente par exemple deux couples d'organes individuels identiques 28 et 29, l'un à l'avant, l'autre à l'arrière, reliés chacun par une articulation de pivotement supérieure 38 et 39 à la plate-forme par l'intermédiaire d'un coulisseau 40, 41 assurant le débattement nécessaire lors des manoeuvres ou des mises en position inclinée de la plate-forme par déplacement le long d'une glissière 42, 43.

On peut noter à l'observation de cette figure le faible encombrement de part et d'autre du passage de roues de l'ensemble de levage, aussi bien à l'état relevé que replié.

Par ailleurs, on se rend compte de la trajectoire quasi verticale de l'extrémité du poteau pendant tout le levage.

Il est bien entendu qu'au-delà des moyens décrits, diverses modifications évidentes et variantes simples entrent dans le cadre de la présente invention tel qu'il est défini les revendications qui suivent.

## Revendications

1. Ensemble de levage à grand débattement formé d'un couple d'organes individuels de levage reliés entre eux pour l'élévation et l'abaissement d'un plan porteur d'un chargement, notamment d'une plate-forme porte-véhicules à laquelle sont articulés, par chacune de leurs extrémités supérieures, des organes individuels de levage se composant chacun d'un poteau porteur basculant (2) articulé par son extrémité inférieure à un châssis (4), par son extrémité supérieure à la plate-forme et en un point intermédiaire à une extrémité d'un bras oblique de soutien (5), lui-même articulé par son autre extrémité à une base fixe (6) par rapport au châssis (4) et actionné en pivotement par un élément moteur en coordination de mouvement avec son homologue de l'autre côté du châssis, l'une ou l'autre des extrémités du poteau basculant (2) étant articulée sur une base mobile (3) en translation par rapport au support adjacent, plateforme ou châssis, caractérisé en ce que chaque poteau porteur basculant (2) est relié à la plate-forme par une liaison extensible de longueur variable en fonction de l'inclinaison dudit poteau porteur basculant.

2. Ensemble de levage à grand débattement selon la revendication 1, caractérisé en ce que la coordination de mouvement entre les poteaux porteurs basculants (2) est réalisée par une liaison mécanique de jumelage entre les deux extrémités inférieures des bras obliques de soutien (5).

3. Ensemble de levage à grand débattement selon la revendication 2, caractérisé en ce que la liaison mécanique de jumelage entre les poteaux porteurs basculants (2) est une barre de jumelage (26).

4. Ensemble de levage à grand débattement selon la revendication 1, caractérisé en ce que la coordination de mouvement entre les poteaux est réalisée par une liaison fonctionnelle de commande en synchronisation du mouvement.

5. Ensemble de levage à grand débattement selon la revendication 1 caractérisé en ce que l'extrémité (9) du bras oblique de soutien (5) articulée sur le poteau porteur basculant (2) se prolonge à l'intérieur de celui-ci pour être articulée à l'extrémité d'une bielle de poussée (11), elle-même articulée à l'extrémité d'une tige d'extension (14) coulissant sous l'effet de la bielle de poussée en mouvements de sortie ou de retrait par rapport à l'extrémité du poteau en fonction de l'inclinaison du bras oblique de soutien et en ce que le prolongement de l'extrémité articulée du bras oblique de soutien (5) est intérieure au poteau porteur basculant (2) et fait office de bras de levier dans un mouvement composé de bielle-manivelle.

6. Ensemble de levage à grand débattement selon la revendication 5, caractérisé en ce que l'extrémité (9) du bras oblique de soutien (5) qui se prolonge à l'intérieur du poteau porteur basculant (2) est coudée vers l'extrémité de la bielle de poussée (11) sur laquelle elle est articulée.

7. Ensemble de levage à grand débattement selon la revendication 1, caractérisé en ce que la base du poteau porteur basculant (2) est articulée à pivotement sur un chariot (19) se déplaçant le long d'une glissière (20) et est immobilisable dans plusieurs positions prédéterminées le long de ce profilé par un verrou (21).

8. Ensemble de levage à grand débattement selon la revendication 7, caractérisé en ce que le verrou est intégré dans le chariot (19).

9. Ensemble de levage à grand débattement selon les revendications 7 ou 8, caractérisé en ce que le verrou est un doigt de blocage effaçable s'engageant dans des passages (23) de la glissière (20).

10. Ensemble de levage à grand débattement selon la revendication 1 caractérisé en ce que l'élément moteur est un vérin (8).

11. Organe de levage formé d'un poteau porteur basculant (2), d'un bras oblique de soutien (5) et d'une liaison extensible d'extrémité tels que combinés, reliés et articulés entre eux et aux éléments voisins et tels qu'actionnés selon l'une quelconque des revendications précédentes.

## Claims

1. Lifting assembly with a large range of movement formed by a pair of individual lifting members connected to one another for lifting and lowering a load-bearing plane, particularly a vehicle-carrying platform, to which individual lifting members are articulated by each of their upper ends, each lifting member comprising a pivoting strut (2) articulated by its lower end to a chassis (4), by its upper end to the platform, and at an intermediate point to one end of an oblique support arm (5) which in turn is articulated by its other end to a base (6) fixed relative to the chassis (4) and is pivoted by a drive member with coordination of movement with the homologous support arm on the other side of the chassis, one or other of the ends of the pivoting strut (2) being articulated to a base (3) which can be translated relative to the adjacent support, platform or chassis, characterized in that each pivoting strut (2) is connected to the platform by an extensible link the length of which is variable in dependence on the inclination of the said pivoting strut.

2. Lifting assembly with a large range of movement according to Claim 1, characterized in that the coordination of the movement of the pivoting struts (2) is achieved by a mechanical coupling link between the two lower ends of the oblique support arms (5).

3. Lifting assembly with a large range of movement according to Claim 2, characterized in that the mechanical coupling link between the pivoting struts (2) is a coupling bar (26).

4. Lifting assembly with a large range of movement according to Claim 1, characterized in that the coordination of the movement of the struts is achieved by a functional control link with synchronization of the movement.

5. Lifting assembly with a large range of movement according to Claim 1, characterized in that the end (9) of the oblique support arm (5) which is articulated to the pivoting strut (2) extends inside the latter in order to be articulated to the end of a thrust rod (11) which in turn is articulated to the end of an extension rod (14) sliding under the effect of the thrust rod with movements out of or into the end of the strut in dependence on the inclination of the oblique support arm, and in that the extension of the articulated end of the oblique support arm (5) is inside the pivoting strut (2) and acts as a lever arm in a composite connecting-rod-and-crank movement.

6. Lifting assembly with a large range of movement according to Claim 5, characterized in that the end (9) of the oblique support arm (5) which extends into the pivoting strut (2) is bent towards the end of the thrust rod (11) to which it is articulated.

7. Lifting assembly with a large range of movement according to Claim 1, characterized in that the base of the pivoting strut (2) is articulated for pivoting on a carriage (19) movable along a sliding track (20) and can be immobilized in several predetermined positions along this profiled section by a locking device (21).

8. Lifting assembly with a large range of movement according to Claim 7, characterized in that the locking device is incorporated in the carriage (19).

9. Lifting assembly with a large range of movement according to Claim 7 or Claim 8, characterized in that the locking device is a resettable locking pin engaging in holes (23) in the sliding track (20).

10. Lifting assembly with a large range of movement according to Claim 1, characterized in that the drive element is a jack (8).

11. Lifting member formed by a pivoting strut (2), by an oblique support arm (5) and by an extensible end connection as combined, connected and articulated to one another and to the adjacent elements and as operated according to any one of the preceding claims.

## Patentansprüche

1. Hebevorrichtung aus mehreren einzelnen Hebeeinrichtungen, die untereinander zum Heben und Senken einer Ladetragfläche, insbesondere einer Fahrzeugtransporter-Ladefläche, mit dieser über jede ihrer oberen Enden gelenkig verbunden sind, wobei die einzelnen Hebeeinrichtungen jede eine schwenkbare Tragsäule (2) aufweist, die an dem unteren Ende mit dem Rahmen (4), an ihrem oberen Ende mit der Ladefläche und an einem mittleren Punkt mit einem Ende eines geneigten Stützarmes (5) gelenkig verbunden ist, wobei dieser selbst an seinem anderen Ende mit einer in Bezug auf den Rahmen (4) festen Basis (6) gelenkig verbunden ist und mittels eines Treibelementes durch drehen unter Abstimmung der Bewegung mit seinem Gegenstück auf der anderen Seite des Rahmens angetrieben wird, wobei das eine oder das andere Ende der kippbaren Tragsäule (2) mit einer in bezug auf den angrenzenden Träger mit der Ladefläche oder dem Rahmen translatorisch beweglichen Basis (3) gelenkig verbunden sind, dadurch gekennzeichnet, daß jede kippbare Tragsäule (2) mit der Ladefläche mittels einer ausfahrbaren Verbindung verbunden ist, deren variable Länge eine Funktion der Neigung der kippbaren Tragsäule (2) ist.

2. Hebevorrichtung nach Anspruch 1, dadurch gekennzeichnet, daß die Bewegungsabstimmung zwischen den kippbaren Tragsäulen (2) mittels einer mechanischen Kopplungsverbindung zwischen den beiden unteren Enden der geneigten Stützarmen (5) verwirklicht ist.

3. Hebevorrichtung nach Anspruch 2, dadurch gekennzeichnet, daß die mechanische Kopplungsverbindung zwischen den kippbaren Tragsäulen (2) eine Kopplungsstange (26) ist.

4. Hebevorrichtung nach Anspruch 1, dadurch gekennzeichnet, daß die Bewegungsabstimmung zwischen den Säulen durch eine funktionale Steuerungsverbindung zur Bewegungssynchronisation verwirklicht ist.

5. Hebevorrichtung nach Anspruch 1, dadurch gekennzeichnet, daß ein Ende (9) des geneigten Stützarmes (5), mit der kippbaren Tragsäule (2), gelenkig verbunden ist, sich bis in deren Inneres streckt, um gelenkig mit dem Ende einer Schubstange (11) verbunden zu sein, die selbst gelenkig mit dem Ende einer Anfahrstange (14) verbunden ist, die sich mittels der Schubstange vorwärts oder rückwärts im Bezug auf das Ende der Säule (2) abhängig von der Neigung des geneigten Stützarmes verschieben kann und daß sich die Verlängerung des gelenkig gelagerten Endes des geneigten Stützarmes (5) bis ins Innere der kippbaren Tragsäule (2) erstreckt und die Aufgabe des Hebelarmes in einer zusammengesetzten Kurbelstange Bewegung übernimmt.

6. Hebevorrichtung nach Anspruch 5, dadurch gekennzeichnet, daß das Ende (9) des geneigten Stützarmes, der sich bis ins Innere der kippbaren Tragsäule (2) erstreckt, knieförmig zum Ende der Distanzstange (11) hin abgewinkelt ist, mit der er gelenkig verbunden ist.

7. Hebevorrichtung nach Anspruch 1, dadurch gekennzeichnet, daß die Basis der kippbaren Tragsäulen (2) für die Drehbewegung gelenkig mit einem Schlitten (19) verbunden ist, der sich entlang einer Laufschiene (20) bewegt und mittels eines Bolzens (21) in mehreren vorbestimmten Positionen entlang eines Profils arretiert werden kann.

8. Hebevorrichtung nach Anspruch 7, dadurch gekennzeichnet, daß der Bolzen (21) in den Schlitten (19) integriert ist.

9. Hebevorrichtung nach Ansprüchen 7 oder 8, dadurch gekennzeichnet, daß der Bolzen (21) ein wirksamer Blokkierstieft ist, der in die Durchgänge (23) der Laufschiene (20) eingreift.

10. Hebevorrichtung nachß Anspruch 1, dadurch gekennzeichet, daß das Motorelement ein Hubzylinder (8) ist.

11. Hebeeinrichtung aus einer kippbaren Tragsäule (2) einem geneigten Stützarm (5) und einer ausfahrbaren Endverbindung sowie kombinierte, die untereinander und mit benachbarten Elementen, nach gemäß einem der vorangehenden Ansprüche, verbunden und angelenkt sind.
